# EUROPEAN PATENT SPECIFICATION

(11) **EP 4 490 369 B1**
(45) Date of publication and mention of the grant of the patent: **17.12.2025**
(21) Application number: 22725309.3
(22) Date of filing: 07.03.2022
(51) Int. Cl.: E04G 1/00, E04G 5/00, E04G 5/02, G01L 1/22, G01M 5/00

(54) **SCAFFOLDING LOAD CONTROL AND MONITORING DEVICE AND SYSTEM FOR SUCH PURPOSES**
LASTKONTROLL- UND ÜBERWACHUNGSGERÄTE FÜR GERÜSTE UND SYSTEME FÜR SOLCHE ZWECKE
DISPOSITIF ET SYSTÈME DE CONTRÔLE ET DE SURVEILLANCE DE CHARGE D'ÉCHAFAUDAGE POUR DE TELLES FINS

(43) Date of publication of application: 15.01.2025
(73) Proprietor: Scaff Load S.A., 02-495 Warszawa (PL)
(72) Inventor: MISIOR, Adam, 02-495 Warszawa (PL); BULINSKI, Damian, 05-506 Warszawa (PL)
(74) Representative: Adamczyk, Piotr
(86) International application number: PCT/PL2022/050012
(87) International publication number: WO 2023/172152

(56) References cited:
- WO-A1-2021/072499
- CN-A- 107 882 318
- CN-A- 107 916 773
- CN-A- 107 916 774
- CN-A- 107 941 388
- CN-A- 108 019 035
- CN-A- 111 997 336

## Description

The subject of the invention is a device for controlling and monitoring the self and service loads of a scaffolding structure, set on the ground using of vertical stands, by means of continuous measurement of the force imposed on the ground by a selected stand of the scaffolding structure, and a system for such purposes.

The patent specification no. PL232389 discloses a device for testing the actual forces acting on a scaffolding vertical stand. It comprises a body that is placed on the ground and a pressure sensor mounted inside this body, on which a scaffolding vertical stand acts from above. Another prior art document relevant to the invention is patent document WO 2021/072499 A1; said document does not disclose in particular the claimed strain gauge pressure sensor arrangement.

The aim of the invention was to obtain the possibility of current measurement of the force imposed on the ground at a given moment by the selected stand of the scaffolding structure and signalling if this force exceeds the set value.

This aim is achieved by a device according to the invention, which comprises a body that can be placed on a ground and a pressure sensor mounted therein. A scaffolding vertical stand acts on this sensor from above. The invention is based on that the body has a base and four side walls. Inside the body a strain gauge pressure sensor with a vertical measuring pin pointing upwards is attached to its base. The pressure sensor is located between two linear guides acting in a vertical axis. The lower parts of both linear guides are attached to the base of the device body, while the upper parts of these guides are connected to the horizontal measuring plate, which is in constant contact with the pressure sensor measuring pin. On the outside of the body, on its two opposite walls, there are handles for positioning and carrying the device. On the third wall of the body there is a casing of the signalling and measuring unit, which includes a controller with a wireless communication module, a display, a replaceable power source, advantageously a battery, a signalling module and means for manual control of the device. The communication antenna is located on the fourth side of the body.

In one of variants of the device according to the invention, the walls of its body form a cuboid, advantageously with a square base. The pressure sensor is centrally located on this base, and both linear guides are located symmetrically on both sides of the sensor, on the diagonal of the body base.

In another variant of the device according to the invention, the lower part of the linear guide of the measuring plate is in the form of a vertical sleeve with an outer cylindrical plain bearing. The upper part of this linear guide is a vertical shaft with a diameter corresponding to the inner diameter of the plain bearing of the lower part. The vertical shaft has an intermediate fastening part on the top, fixed on the bottom to the measuring plate, and on the bottom this shaft has a special part preventing it from slipping out of the lower part of the linear guide. In next variant of the device according to the invention, an intermediate measuring pin is provided between the pressure sensor pin and the measuring plate, which has an upper positioning element that fits into a correspondingly shaped positioning hole in the measuring plate.

In next variant of the device according to the invention, the additional fastening part of the linear guide is in the form of a vertical sleeve with a flange entering a cylindrical recess on the lower surface of the measurement plate.

In another variant of the device according to the invention, along the sides of the measurement plate there are projections limiting the lateral movement of the foot of the vertical scaffolding stand, and on the outer surface of the fourth body wall there is a casing for the communication antenna in the shape of a truncated pyramid.

In yet another variant of the device according to the invention, the handles and the casing of the signalling unit are in the form of truncated pyramids.

The system according to the invention comprises at least one measuring unit and at least one signalling and alarm unit, which are wirelessly connected to each other. The invention is based on the fact that the measuring unit is a device according to the invention described above. Both types of units forming the system according to the invention include units for identification by means of radio waves (Radio Frequency Identification - RFID). Moreover, the signalling and alarm unit comprises fastening means for hanging it, means of acoustic and light signalling, a controller with a wireless communication module and an identification module, a display, a replaceable power source, and means for manual control of the signalling and alarm unit.

In one of the variants of the system according to the invention, the controller, the identification unit and the replaceable power source are located inside the casing of the signalling and measuring unit, while the acoustic and light signalling means are mounted outside the casing of this unit.

In another variant of the system according to the invention, the casing of the signalling and measuring unit is vertically divided into two parts connected with each other by hinges with a vertical axis of rotation. The fastening means and the acoustic and light signalling means of the unit are fixed to the first casing part, while the display and manual control means are provided on the second part of the casing.

The invention radically increases the safety of work on the construction site, and the safety of third parties in the case of scaffolding structures placed directly on the streets, as it allows the user to control the load on the scaffolding structure on an ongoing basis and send measurement results and alarm signals in the case the permissible load is exceeded, considering even many parts of the scaffolding, without interference into its very structure. The system according to the invention generates, if necessary, an alarm signal sent to mobile devices as well as a sound and light signal. It allows one to make a quick decision to evacuate workers and/or reduce the load on the structure. The low height of the device according to the invention allows it to be installed under the base plates of an already erected scaffolding structure and, if necessary, to quickly change the place of inspection or measurement. Reading of the current load and setting a specific threshold that triggers an alarm is possible both remotely and manually. Autonomous power supply and easy interchangeability of its sources make the application of the invention completely independent from the local power grid.

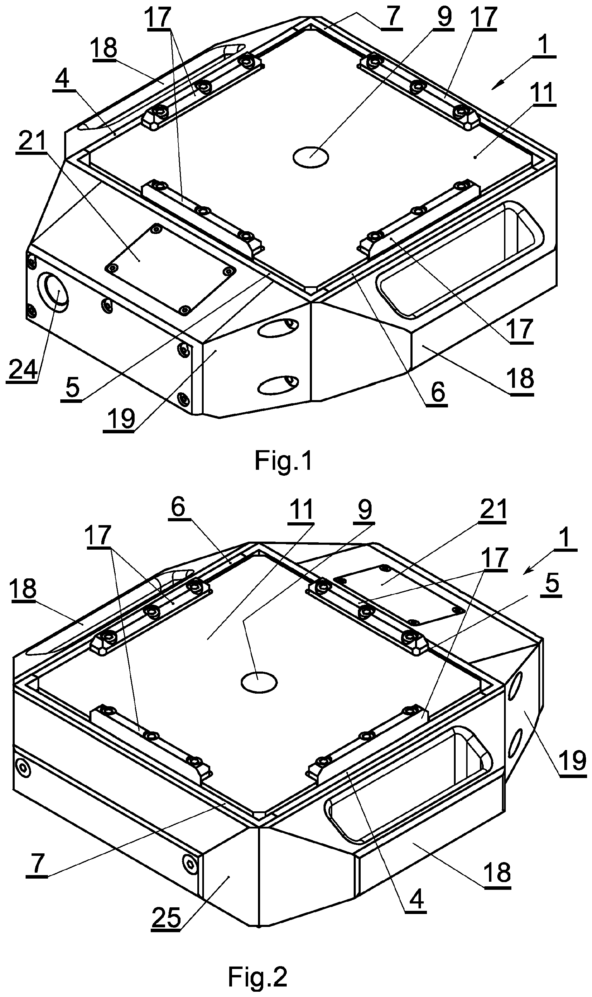

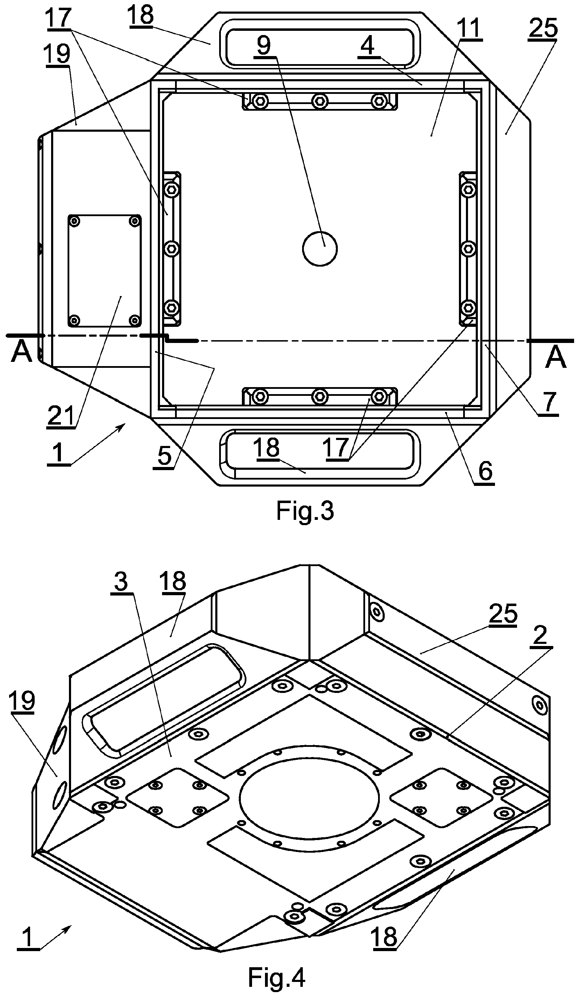

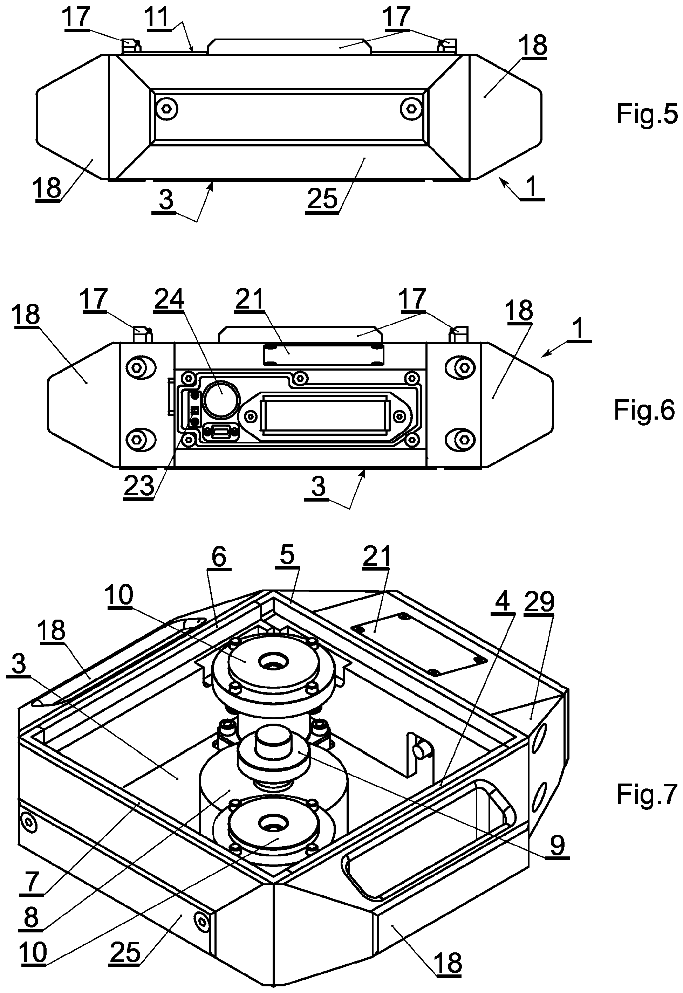

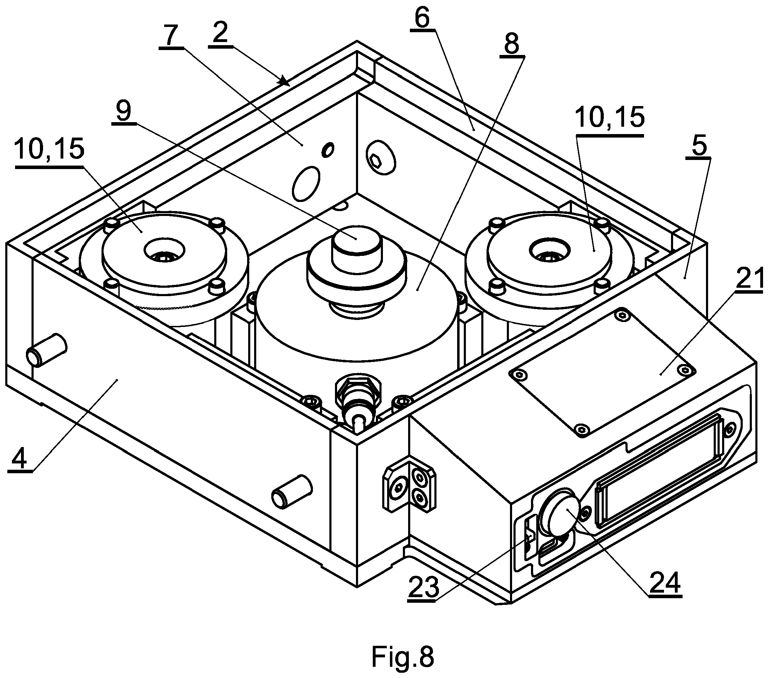

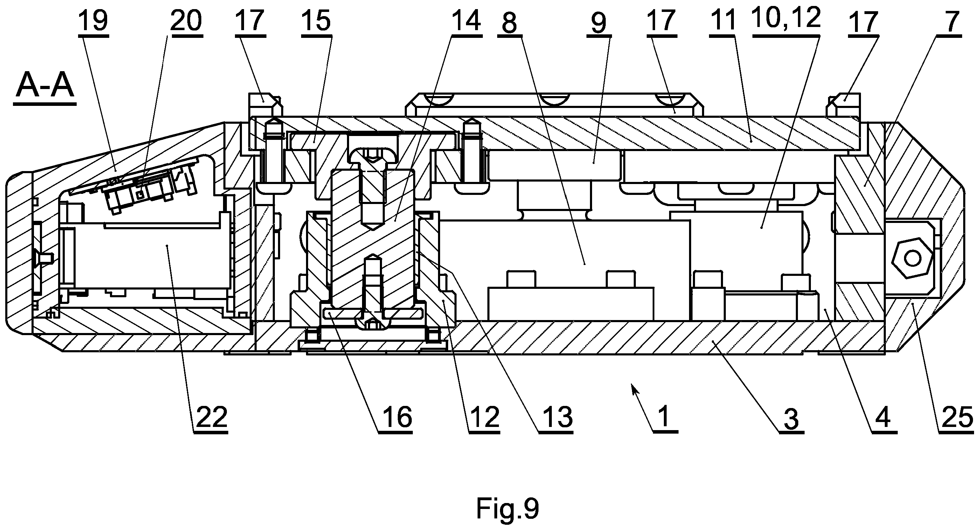

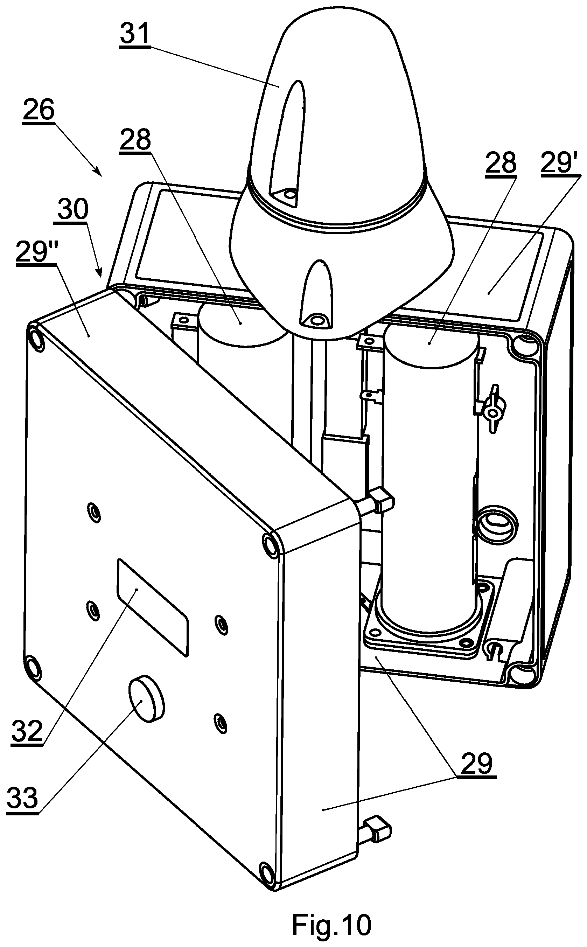

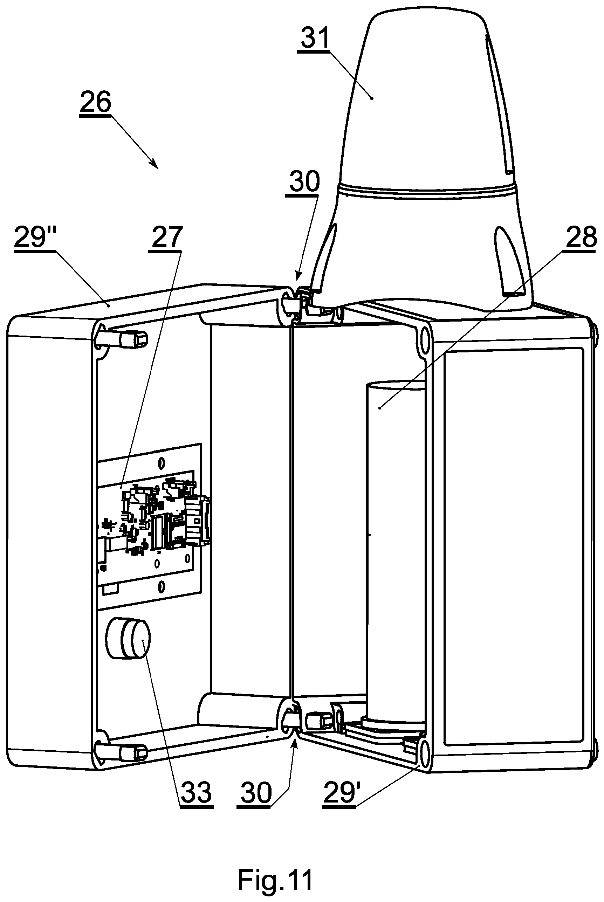

An embodiment of the invention will be described below and shown in the drawing, in which Fig.1 is an axonometric front view of the device and Fig.2 is an axonometric rear view of the device. Fig.3 shows the device of Fig.1 in a rectangular view from above, and Fig.4 shows the device in an axonometric view from below. Fig.5 and Fig.6 are - respectively - orthogonal views from the front and the back of the device of Fig.1. Fig.7 shows the device of Fig.2 with the measuring plate disassembled. Fig.8 is an enlarged view of the device of Fig.7, seen from another direction, with the handles and casings disassembled. Fig.9 shows the device of Fig.3 in section with a vertical plane. Fig.10 and Fig.11 show two axonometric views of the signalling and alarm unit according to the invention.

Exemplary monitoring device 1 comprises a steel, open-top, rectangular body 2 which has a square base 3 with dimensions of 200 by 200 mm and a thickness of 10 mm. Along the side edges of the base 3, are a first 4, a second 5, a third 6 and a fourth 7 vertical sidewalls, each 60 mm high and 15 mm thick. The base 3 and the sidewalls 4, 5, 6 and 7 are connected to each other by screws. In the interior of the body 2, a centrally mounted strain gauge 8 under the trade name Ulticell M420 is mounted to the base 3. The sensor 8 has a vertical pin with an operating stroke of 0.6 mm when loaded with a force of 50 kN. On the mentioned measuring pin, rests the intermediate measuring pin 9, which transfers the load from the scaffold to the sensor 8. On the diagonal of the base 3, on both sides of the sensor 8, there is one linear guide 10 with a vertical axis of operation. The body 2 is closed at the top by a steel measuring plate 11 with dimensions of 185 mm by 185 mm and a thickness of 10 mm. The lower part of the linear guide 10 is bolted to the base 3 and is in the form of a vertical sleeve 12 with an internal cylindrical plain bearing 13. The upper part of the linear guide 10 is a vertical shaft 14 with a diameter corresponding to the internal diameter of the plain bearing 13. The shaft 14 has an intermediate element screwed on to the top 15 in the form of a sleeve with a collar. The flange of the intermediate element 15 enters a cylindrical recess on the lower surface of the measurement plate 11 and is attached to it by means of a clamping ring and four screws. From below, the vertical shaft 14 has a securing element 16 to prevent the shaft 14 from slipping out of the bearing 13. The gauge plate 11 is in constant contact with the additional intermediate pin 9. The pin 9 has an upper cylindrical positioning element that fits into a corresponding positioning hole in the gauge plate 11. During the operation of the device 1, the base 3 of the body 2 rests on the ground, while a given known stand foot of the scaffolding to be monitored, not shown in the drawing, is set on the upper surface of the measuring plate 11. Special protrusions 17 are screwed along all four sides of the measurement plate 11 to limit the lateral movements of said foot of the vertical scaffolding stand. Outside the body 2, on the first 4 and the third 6 side walls of the body 2, there are handles 18 for positioning and carrying the device 1. On the second wall 5 of the body 2 there is a casing 19 of the signalling and measuring unit. The unit includes a controller 20 with a wireless communication module and a RFID (Radio Frequency Identification) module, display 21, replaceable supply battery 22, signalling device, switch 23 and operating button 24 for manual control of the device 1. On the fourth wall 7 of the body 2 there is a casing 25, for not shown in the drawing a communication antenna connected to the wireless communication module of the controller 20. The outer contours of the handles 18 made of polyacetal (POM-C) and the outer contours of the casings 19 and 25 made of the same material are in the form of elongated truncated pyramids. Casings 19 and 25 protect the electronic circuits built into them against damage. The completed device 1 has a height of 87 mm, a width of 280 mm and a depth of 290 mm.

The load on the simple scaffolding can be monitored even with a single device 1, but the system according to the invention, comprising of at least one device 1 and at least one signalling and alarm unit 26 external to the device 1, wirelessly connected to each other, can provide much greater efficiency. An exemplary signalling and alarm unit 26 includes a controller 27 with a unit for identification by means of radio waves of the RFID type (Radio-Frequency Identification) and NFC (Near Field Communication), as well as a replaceable power battery 28. These components are located in a rectangular casing 29, vertically divided into two parts 29' and 29" connected to each other by hinges 30 with a common vertical axis of rotation. Outside the casing 29 there is a known alarm signaling device 31, emitting acoustic and light signals, attached to the first part 29' of the casing 29. On the outer wall of the first part 29' of the casing 29 there are also, not shown, handles for fixing the casing 29 to the scaffolding structure, buildings wall or free-standing support. A display 32, visible from the outside, is attached to the second hinge-open part 29" of the casing 29. Adjacent to the display 32, on the outer wall of the second part 29" of the casing 29 is a function button 33 for manual control of the unit 26. The above-described scaffolding load monitoring system comprises at least one measuring device 1 as described above and at least one signalling and alarm unit 26. The measuring device 1 is placed under the selected scaffolding foot, and then the level of the permissible load at a given point of the scaffolding structure is programmed in it. When the device 1 is turned on, it measures cyclically the load exerted on the measurement plate 11 by the foot of the scaffolding. The length of the measuring cycle of device 1 may be programmed from one second to any number of hours. In the case the device 1 detects a load exceeding a predetermined level, this device sends a signal via radio to the signalling and alarm unit 26, placed in a visible place near the monitored scaffolding. The light and sound signal from the alarm siren 31 is intended to draw the attention of the persons responsible for the condition of the scaffolding and/or technical service. An alarm signal from device 1 is sent until the load at a given point in the scaffolding returns to a safe level. The alarm signal can also be muted using a known NFC access card. The signalling and alarm unit 26 is powered by replaceable batteries 28. Autonomous power supply for the components of the system according to the invention eliminates the need to route power cables along the scaffolding structure, which positively affects the work safety. The measuring device 1 and the signalling and alarm unit 26 have a common communication medium, based on the certified radio module SPSGRFC by STMicroelectronics. Radio modules, included in the controllers 20 and 27, can be made in three different versions, adapted to work at the frequencies of 433 MHz, 868 MHz or 915 MHz, while in the described embodiment the frequency of 868 MHz was used for communication and a special communication protocol was designed for this purpose. As elements of the user interface, both in the measuring device 1 and in the signalling and alarm unit 26, a graphic display (21, 32) in OLED technology, an RGB LED signalling diode and a piezoelectric button (25, 33) were used.

## Claims

1. A device for controlling and monitoring loads acting on a scaffolding structure, which comprises a body placed on the ground and a pressure sensor mounted therein, on which a vertical scaffolding stand exerts a load from above, wherein the body (2) has a base (3) and four side walls (4,5,6,7), inside this body (2) to its base (3) a strain gauge pressure sensor (8) is mounted, having a vertical measuring pin pointing upwards and located between two linear guides (10) with a vertical axis of operation, wherein the lower parts (12, 13) of the linear guides (10) are attached to the base (3) of the body (2), and the upper parts (14, 15) of these guides (10) are connected to the horizontal measuring plate (11) being in constant contact (9) with the measuring pin of the sensor (8), wherein outside of the body (2), on two opposite walls (4, 6), there are handles (18) for the device (1) positioning and carrying, and on the third wall (5) of the body (2) there is a casing (19) containing a signalling and measuring unit, which includes a controller (20) with a wireless communication module, a display (21), a replaceable power source (22), advantageously a battery, an indicator and manual control means (24) of the device (1), while on the fourth wall (7) a communication antenna is located.

2. The device according to claim 1, **characterized in that** the walls (4, 5, 6, 7) of the body (2) form a cuboid, advantageously with a square base, the pressure sensor (8) is centrally located on this base (3), and the both linear guides (10) are located symmetrically on both sides of the sensor (8), on the diagonal of the body (2) base (3).

3. The device according to claim 1 or 2, **characterized in that** the lower part of the linear guide (10) has a form of a vertical sleeve (12) with an internal cylindrical plain bearing (13), whereas the upper part of the linear guide (10) is a vertical shaft (14) with a diameter corresponding to the internal diameter of the plain bearing (13), while the vertical shaft (14) has an intermediate fastening element (15) at the top, fixed at the bottom to the measuring plate (11), and the bottom vertical shaft (14) has an element preventing the shaft (14) from slipping out of the lower part (12, 13) of the linear guide (10).

4. The device according to claim 1 or 2 or 3, **characterized in that** between the measuring pin of the sensor (8) and the measurement plate (11) is located an intermediate pin (9) with upper positioning element entering the positioning hole of the corresponding shape in the measurement plate (11).

5. The device according to claim 2 or 3 or 4, **characterized in that** the intermediate fastening element (15) of the linear guide (10) is in a form of a sleeve with a flange entering into a cylindrical recess on the lower surface of the measurement plate (11).

6. The device according to one of claims from 1 to 5, **characterized in that** along the sides of the measuring plate (11) there are protrusions (17) limiting the lateral movement of the foot of the scaffolding vertical stand, and on the outer surface of the fourth wall (7) of the body (2) there is a communication antenna casing (25) in a shape of a truncated pyramid.

7. The device according to one of claims from 1 to 6, **characterized in that** the handles (18) and the casing (19) of the signalling unit are in the form of truncated pyramids.

8. A system for controlling and monitoring loads on the scaffolding structure, comprising at least one device (1) according to one of claims from 1 to 7, said device (1) further comprising a RFID unit, and at least one signalling and alarm unit (26) external to the device (1),
wherein the signalling and alarm unit (26) comprises a controller (27) with a RFID unit, so that both units are wirelessly connected to each other, and
said signalling and alarm unit (26) further comprises means for hanging it, acoustic and light signalling means (31), a display (32), a replaceable power source (28), and means for manual control (33) of the signalling and alarm unit (26).

9. The system according to claim 8, **characterized in that** the controller (27), the identification unit, and the replaceable power source (28) are located inside the casing (29) of the signalling and alarm unit (26), and the acoustic and light signalling means (31) are mounted on the outside of the casing (29) of the unit (26).

10. The system according to the claim 9, **characterized in that** the casing (29) of the signalling and alarm unit (26) has a shape of a cuboid divided vertically into two parts (29 ', 29"), these parts (29', 29") are connected by hinge means (30) with a vertical axis of rotation, the fastening means and the acoustic and light signalling means (31) are attached to the first part (29') of the casing (29), while the display (32) and manual control means (33) are located on the second part (29") of the casing (29).

## Patentansprüche

1. Eine Vorrichtung zum Steuern und Überwachen von auf eine Gerüstkonstruktion einwirkenden Lasten, die einen auf der Grundfläche befindlichen Körper und einen darin eingebauten Drucksensor umfasst, auf den ein vertikaler Gerüstständer von oben eine Last ausübt, **wobei** der Körper (2) eine Grundfläche (3) und vier Seitenwände (4, 5, 6, 7) hat, innerhalb dieses Körpers (2) an seiner Grundfläche (3) ein Dehnungsmessstreifen-Drucksensor (8) eingebaut ist, der einen vertikalen, nach oben gerichteten Messstift aufweist und zwischen zwei Linearführungen (10) mit vertikaler Betriebsachse angeordnet ist, wobei die unteren Teile (12, 13) der Linearführungen (10) an der Grundfläche (3) des Körpers (2) befestigt sind und die oberen Teile (14, 15) dieser Führungen (10) mit der horizontalen Messplatte (11) verbunden sind, die in ständigem Kontakt (9) mit dem Messstift des Sensors (8) steht, wobei außerhalb des Körpers (2) an zwei gegenüberliegenden Wänden (4, 6) Griffe (18) zum Positionieren und Tragen der Vorrichtung (1) vorgesehen sind und an der dritten Wand (5) des Körpers (2) ein Gehäuse (19) angeordnet ist, das die Signal- und Messeinheit enthält, die eine Steuereinheit (20) mit einem drahtlosen Kommunikationsmodul, eine Anzeige (21), eine austauschbare Energiequelle (22), vorzugsweise eine Batterie, eine Anzeige und manuelle Steuerungsmittel (24) für die Vorrichtung (1) umfasst, während an der vierten Wand (7) eine Kommunikationsantenne angeordnet ist.

2. Die Vorrichtung nach Anspruch 1, **dadurch gekennzeichnet, dass** die Wände (4, 5, 6, 7) des Körpers (2) einen Quader bilden, vorzugsweise mit einer quadratischen Grundfläche, der Drucksensor (8) mittig auf dieser Grundfläche (3) angeordnet ist und die beiden Linearführungen (10) symmetrisch auf beiden Seiten des Sensors (8) auf der Diagonale der Grundfläche (3) des Körpers (2) angeordnet sind.

3. Die Vorrichtung nach Anspruch 1 oder 2, **dadurch gekennzeichnet, dass** der untere Teil der Linearführung (10) die Form einer vertikalen Hülse (12) mit einem inneren zylindrischen Gleitlager (13) hat, während der obere Teil der Linearführung (10) eine vertikale Welle (14) mit einem Durchmesser ist, der dem Innendurchmesser des Gleitlagers (13) entspricht, wobei die vertikale Welle (14) oben ein Zwischenbefestigungselement (15) aufweist, das unten an der Messplatte (11) befestigt ist, und die untere vertikale Welle (14) ein Element aufweist, das verhindert, dass die Welle (14) aus dem unteren Teil (12, 13) der Linearführung (10) herausrutscht.

4. Die Vorrichtung nach Anspruch 1, 2 oder 3, **dadurch gekennzeichnet, dass** sich zwischen dem Messstift des Sensors (8) und der Messplatte (11) ein Zwischenstift (9) mit einem oberen Positionierungselement befindet, das in die Positionieröffnung mit entsprechender Form in der Messplatte (11) eingeführt wird.

5. Die Vorrichtung nach Anspruch 2, 3 oder 4, **dadurch gekennzeichnet, dass** das Zwischenbefestigungselement (15) der Linearführung (10) die Form einer Hülse mit einem Flansch hat, der in eine zylindrische Aussparung an der Unterseite der Messplatte (11) eindringt.

6. Die Vorrichtung nach einem der Patentansprüche 1 bis 5, **dadurch gekennzeichnet, dass** entlang den Seiten der Messplatte (11) Vorsprünge (17) vorgesehen sind, die die seitliche Bewegung des Fußes des vertikalen Gerüstständers begrenzen, und dass an der Außenfläche der vierten Wand (7) des Körpers (2) ein Kommunikationsantennengehäuse (25) in Form einer Pyramidenstumpfform vorgesehen ist.

7. Die Vorrichtung nach einem der Ansprüche 1 bis 6, **dadurch gekennzeichnet, dass** die Griffe (18) und das Gehäuse (19) der Signaleinheit die Form von Pyramidenstümpfen haben.

8. Ein System zur Steuerung und Überwachung von Lasten auf der Gerüstkonstruktion, umfassend mindestens eine Vorrichtung (1) gemäß einem der Ansprüche 1 bis 7, wobei die Vorrichtung (1) ferner eine RFID-Einheit und mindestens eine außerhalb der Vorrichtung (1) angeordnete Signal- und Alarmeinheit (26) umfasst, wobei die Signal- und Alarmeinheit (26) eine Steuereinheit (27) mit einer RFID-Einheit umfasst, sodass beide Einheiten drahtlos miteinander verbunden sind, und wobei die Signal- und Alarmeinheit (26) ferner Mittel zum Aufhängen, akustische und Lichtsignalmittel (31), eine Anzeige (32), eine austauschbare Energiequelle (28) und eine manuelle Steuervorrichtung (33) der Signal- und Alarmeinheit (26) umfasst.

9. Das System gemäß Anspruch 8, **dadurch gekennzeichnet, dass** sich die Steuereinheit (27), die Identifizierungseinheit und die austauschbare Energiequelle (28) innerhalb des Gehäuses (29) der Signal- und Alarmeinheit (26) befinden und die akustischen und optischen Lichtsignalmittel (31) an der Außenseite des Gehäuses (29) der Signal- und Alarmeinheit (26) angebracht sind.

10. Das System gemäß Anspruch 9, **dadurch gekennzeichnet, dass** das Gehäuse (29) der Signal- und Alarmeinheit (26) die Form eines Quaders hat, der vertikal in zwei Teile (29', 29",) unterteilt ist, wobei diese Teile (29', 29",) durch eine Scharniervorrichtung (30) mit einer vertikalen Drehachse verbunden sind, die Befestigungsvorrichtung und die akustische und Lichtsignalmittel (31) am ersten Teil (29') des Gehäuses (29), während die Anzeige (32) und die manuelle Steuervorrichtung (33) am zweiten Teil (29") des Gehäuses (29) angebracht sind.

## Revendications

1. Un dispositif de contrôle et de suivi des charges de la structure d'un échafaudage, comportant un corps, posé sur le sol et un capteur de pression fixé au corps lequel capteur est sollicité d'en haut par une échasse verticale d'échafaudage, **caractérisé en ce que** le corps (2) comporte un châssis (3) et quatre parois latérales (4, 5, 6, 7), à l'intérieur du corps (2), un capteur tensométrique de pression (8) est fixé au châssis (3) avec un tampon jauge orienté vers le haut, situé entre deux glissières linéaires (10) à axe d'action vertical, les parties inférieures (12, 13) des glissières linéaires (10) étant fixées au châssis (3) du corps (2) et les parties supérieures (14, 15) de ces glissières (10) sont reliées à une plaque de mesure horizontale (11), demeurant en contact permanent (9) avec le tampon jauge du capteur (8), cependant à l'extérieur du corps (2), ses deux parois opposées (4, 6) comportent des poignées (18) pour positionner et transporter le dispositif (1), alors que la troisième paroi (5) du corps (2) comporte le boîtier (19) d'un groupe de signalisation et de mesure qui comporte un contrôleur (20) à carte de communication sans fil, un écran (21), une source d'alimentation amovible (22), avantageusement une batterie, un avertisseur et des moyens de commande manuelle (24) du dispositif (1), la quatrième paroi (7) comportant une antenne de télécommunication.

2. Le dispositif concerné par la revendication 1, **caractérisé en ce que** les parois (4, 5, 6, 7) du corps (2) forment un parallélépipède, avantageusement à base carrée, le capteur de pression (8) est positionné au centre du châssis (3), les deux glissières linéaires (10) étant positionnées symétriquement de part et d'autre du capteur (8), sur la diagonale du châssis (3) du corps (2).

3. Le dispositif concerné par la revendication 1 ou 2, **caractérisé en ce que** la partie inférieure de la glissière linéaire (10) a la forme d'un manchon vertical (12) avec un palier à glissement cylindrique externe (13) alors que la partie supérieure de la glissière linéaire (10) est constituée d'un rouleau vertical (14) dont le diamètre correspond au diamètre interne du palier à glissement (13), étant entendu que le rouleau vertical (14) possède dans sa partie supérieure un élément intermédiaire de fixation (15) fixé en bas à la plaque de mesure (11) et dans sa partie inférieure, le rouleau vertical (14) possède un élément de protection du glissement de ce rouleau (14) de la partie inférieure (12, 13) de la glissière linéaire (10).

4. Le dispositif concerné par la revendication 1 ou 2 ou 3, **caractérisé en ce que** entre le tampon jauge du capteur (8) et la plaque de mesure (11) il y a un tampon jauge intermédiaire (9) dont l'élément de positionnement supérieur pénètre dans un orifice de positionnement de forme correspondante situé dans la plaque de mesure (11).

5. Le dispositif concerné par la revendication 2 ou 3 ou 4, **caractérisé en ce que** l'élément intermédiaire de fixation (15) de la glissière linéaire (10) a la forme d'un manchon vertical à bride, pénétrant dans un évidement cylindrique dans la surface inférieure de la plaque de mesure (11).

6. Le dispositif concerné par l'une des revendications de 1 à 5, **caractérisé en ce que** le long des flancs de la plaque de mesure (11) il y se trouve des ergots (17) limitant le déplacement latéral du pied d'étançon vertical de l'échafaudage, tandis que la surface externe de la quatrième paroi (7) du corps (2) comporte un écran de protection (25) de l'antenne de télécommunication en forme de pyramide tronquée.

7. Le dispositif concerné par l'une des revendications de 1 à 6, **caractérisé en ce que** les poignées (18) et le boîtier (19) du groupe de signalisation ont la forme de pyramides tronquées.

8. Un système de contrôle et de suivi des charges de la structure de l'échafaudage, comportant au moins un dispositif (1), concerné par l'une des revendications de 1 à 7, ledit dispositif (1) comporte en outre un groupe RFID et au moins un groupe de signalisation et d'alarme (26), externe par rapport au dispositif (1), étant entendu que le groupe de signalisation et d'alarme (26) comporte un contrôleur (27) avec un groupe RFID de sorte à ce que les deux unités soient connectées sans fil l'une à l'autre, tandis que le groupe de signalisation et d'alarme (26) évoqué comporte en outre des moyens destinés à le suspendre, des moyens de signalisation sonore et lumineuse (31), un écran (32), une source d'alimentation amovible (28) et des moyens de commande manuelle (33) du groupe de signalisation et d'alarme (26).

9. Le système concerné par la revendication 8, **caractérisé en ce que** le contrôleur (27), le groupe d'identification et la source d'alimentation amovible (28) se trouvent à l'intérieur du boîtier (29) du groupe de signalisation et d'alarme (26), et les moyens de signalisation sonore et lumineuse (31) sont fixés à l'extérieur du boîtier (29) de ce groupe (26).

10. Le système concerné par la revendication 9, **caractérisé en ce que** le boîtier (29) du groupe de signalisation et d'alarme (26) a la forme d'un parallélépipède divisé verticalement en deux parties (29', 29"), étant entendu que lesdites parties (29', 29") sont reliées par des moyens à charnière (30) à axe de rotation vertical, les moyens de fixation et les moyens de signalisation sonore et lumineuse (31) sont fixés à la première partie (29') du boîtier (29), tandis que l'écran (32) et les moyens de commande manuelle (33) se trouvent sur la deuxième partie (29") du boîtier (29).
